# EUROPEAN PATENT SPECIFICATION

(11) **EP 4 610 512 B1**
(45) Date of publication and mention of the grant of the patent: **08.04.2026**
(21) Application number: 24160017.0
(22) Date of filing: 27.02.2024
(51) Int. Cl.: F16D 13/52, F16D 21/06

(54) **CLUTCH ASSEMBLY FOR SELECTIVELY COUPLING ONE OF A FIRST OUTPUT SHAFT AND A SECOND OUTPUT SHAFT WITH AN INPUT SHAFT, TRANSMISSION UNIT, AND VEHICLE**
KUPPLUNGSANORDNUNG ZUR WAHLWEISEN KOPPLUNG EINER ERSTEN ABTRIEBSWELLE UND EINER ZWEITEN ABTRIEBSWELLE MIT EINER EINGANGSWELLE, GETRIEBEEINHEIT UND FAHRZEUG
ENSEMBLE EMBRAYAGE POUR COUPLER SÉLECTIVEMENT UN D'UN PREMIER ARBRE DE SORTIE ET D'UN SECOND ARBRE DE SORTIE AVEC UN ARBRE D'ENTRÉE, UNITÉ DE TRANSMISSION ET VÉHICULE

(43) Date of publication of application: 03.09.2025
(73) Proprietor: Volvo Car Corporation, 405 31 Göteborg (SE)
(72) Inventor: CAIN, Peter, 40531 Göteborg (SE)
(74) Representative: Kransell & Wennborg KB

(56) References cited:
- JP-A- H0 429 647
- US-A1- 2011 192 693

## Description

### TECHNICAL FIELD

The present invention relates to a clutch assembly for selectively coupling one of a first output shaft and a second output shaft with an input shaft.

Moreover, the invention is directed to a transmission unit.

Furthermore, the invention relates to a vehicle comprising such a clutch assembly or such a transmission unit.

### BACKGROUND ART

For vehicles with an internal combustion engine, it is common to have a transmission unit between the internal combustion engine and driven road wheels. Due to a conversion between torque and rotational speed achieved by the transmission unit, the internal combustion engine can be operated in a speed range that is fuel-efficient.

Also in electric vehicles driven by an electric motor, it may be beneficial to apply a transmission unit between the electric motor and the driven road wheels. However, since an electric motor operates efficiently over a broad speed range, transmission units for electric vehicles typically comprise fewer gears than transmission units for vehicles with an internal combustion engine.

US 2011/192693 A1 discloses a self-adjusting twin or dual clutch assembly for a dual clutch transmission including a single actuator.

JP H04 29647 A describes a switching operation device of a gear train.

### SUMMARY

It is an objective of the present invention to provide an improved transmission unit which is in particular suitable for an electric vehicle.

The problem is at least partially solved or alleviated by the subject matter of the independent claims of the present disclosure, wherein further examples are incorporated in the dependent claims.

According to a first aspect, there is provided a clutch assembly for selectively coupling one of a first output shaft and a second output shaft with an input shaft. The clutch assembly comprises:
- an input flange configured for coupling to the input shaft,
- a first coupling means rotatable around a first axis,
- a second coupling means rotatable around a second axis,
- a first output flange configured for coupling to the first output shaft, and
- a second output flange configured for coupling to the second output shaft, and
- a biasing means.
The first coupling means is drivingly connected to the input flange and drivingly connected to the first output flange. The first coupling means drivingly connects the input flange and the first output flange when in an engagement state. The first coupling means drivingly disconnects the input flange and the first output flange when in a disengagement state. The second coupling means is drivingly connected to the input flange and drivingly connected to the second output flange. The second coupling means drivingly connects the input flange and the second output flange when in an engagement state. The second coupling means drivingly disconnects the input flange and the second output flange when in a disengagement state. The second coupling means is biased into the engagement state and the first coupling means is biased into the disengagement state by the biasing means. The second coupling means is axially and/or radially nested in the first coupling means. The input flange may receive a torque from an electric motor of a vehicle via the input shaft. The first output flange and/or the second output flange may provide the torque to driven road wheels of the vehicle via a differential and road wheel drive shafts. Hence, the clutch assembly has the effect that the torque path from the electric motor to the driven road wheels may be selectively varied. The clutch assembly is biased towards a torque path from the electric motor to the driven road wheels via the second coupling means and the second output flange. Consequently, using the torque path from the electric motor to the driven road wheels via the second coupling means and the second output flange does not require any specific actuation. More generally speaking, using the torque path from the electric motor to the driven road wheels via the second coupling means and the second output flange does not require actuation energy. Only if the torque path from the electric motor to the driven road wheels via the first coupling means and the first output flange shall be used, an actuation is necessary which then needs to act against the biasing means. Such a configuration is simple from a structural point of view. From an operational point of view, such a configuration is simple and reliable since, due to the biasing means, an alternative use of the first coupling means and the second coupling means is guaranteed, i.e. errors are reduced or eliminated.

According to the present invention, the second coupling means is axially and/or radially nested in the first coupling means. Axially nested is to be understood as being nested with respect to the first axis of the first coupling means and/or with respect to the second axis of the second coupling means. This means that the first coupling means and the second coupling means at least partially overlap along the first axis and/or the second axis. In an example, the first coupling means and the second coupling means may be located at substantially the same axial position with respect to the first axis and/or the second axis. For this, an outer diameter of at least a portion of the second coupling means needs to be smaller than an outer diameter of at least a portion of the first coupling means. Radially nested is to be understood as being nested with respect to a radial direction defined with respect to the first axis and/or with respect to the second axis. This means that the first coupling means and the second coupling means at least partially overlap along the radial direction defined with respect to the first axis and/or along the radial direction defined with respect to the second axis. In simplified words, a case in which the second coupling means is axially and radially nested in the first coupling means may be described as the second coupling means received within or inside the first coupling means. Axially and/or radially nesting has the effect that the clutch assembly is comparatively small in an axial direction and/or in a radial direction. This saves axial and/or radial space in the drivetrain of the vehicle.

In an example, the first coupling means and/or the second coupling means are clutches, i.e. components configured to drivingly connect two moving or rotating elements with each other, e.g. drive shafts of a drivetrain of the vehicle

It is noted that even though the above explanations mention a potential use in an electric vehicle, it is also possible to use the clutch assembly according to the present disclosure in a vehicle with an internal combustion engine.

In an example, the first axis and the second axis coincide. Additionally or alternatively one or more of a middle axis of the input flange, a middle axis of the first output flange and a middle axis of the second output flange coincide. In other words, the respective axes are identical. Put otherwise, these axes are coaxial. This means that the first coupling means and the second coupling means and/or the input flange and/or the first output flange and/or the second output flange rotate around the same axis. This has the effect that an efficient and reliable transmission of torque from the input flange to the first output flange and/or to the second output flange is provided. Moreover, such a clutch assembly is compact.

In an example, the first coupling means is a first multi-plate clutch comprising a plurality of first plates, a first outer plate carrier and a first inner plate carrier. The second coupling means is a second multi-plate clutch, comprising a plurality of second plates, a second outer plate carrier and a second inner plate carrier. Both for the first multi-plate clutch and for the second multi-plate clutch, the plurality of plates comprises a first type of plates that are rotatorily coupled to the respective inner plate carrier. These plates may be called inner plates or inner disks. The plurality of plates also comprises a second type of plates that are rotatorily coupled to the respective outer plate carrier. These plates may be called outer plates or outer disks. In this context, rotatorily coupled means that the plates are coupled to the respective inner plate carrier or outer plate carrier such that they can only rotate together. In other words, a rotatory coupling does not allow for a relative rotation of the parts rotatorily coupled. Both the first type of plates and the second type of plates are axially movable with respect to the respective inner plate carrier and the respective outer plate carrier. An axial direction of the first multi-plate clutch is to be understood as the direction of the first axis. An axial direction of the second multi-plate clutch is to be understood as the direction of the second axis. The first type of plates are alternatingly arranged with the second type of plates. This has the effect that torque may be transmitted between the respective outer plate carrier and the respective inner plate carrier when an axial clamping force is applied to the plurality of respective plates. Such multi-plate clutches have a comparatively high capacity to transfer torque while they are comparatively compact at the same time.

In an example, the first outer plate carrier is fixedly connected to the input flange. Additionally or alternatively, the first inner plate carrier is fixedly connected to the first output flange. Additionally or alternatively, the second inner plate carrier is fixedly connected to the second output flange. Additionally or alternatively, the second outer plate carrier is rotatorily connected to the first outer plate carrier and axially movable relative to the first outer plate carrier. In this context, fixedly connected is to be understood as translatorily and rotatorily connected. This means that the first outer plate carrier and the input flange may be formed by the same part or by fixedly parts connected to one another. Likewise, the first inner plate carrier at the first output flange may be formed by the same part or by fixedly parts connected to one another. Also, the second inner plate carrier and the second output flange may be formed by the same part or by fixedly parts connected to one another. This has the effect that a torque received at the input flange is reliably provided to the first outer plate carrier. Similarly, a torque transmitted to the first inner plate carrier is reliably provided to the first output flange. Also, a torque provided to the second inner plate carrier is reliably provided to the second output flange. Moreover, rotatorily connected parts are parts that can only rotate together. In other words, a rotatory connection does not allow for a relative rotation of the parts rotatorily connected. Thus, the second outer plate carrier being rotatorily connected to the first outer plate carrier and axially movable relative to the first outer plate carrier has the effect that the torque received at the input flange may be reliably provided to the second outer plate carrier via the first outer plate carrier. At the same time, a translatory movement of the second outer plate carrier is decoupled from the first outer plate carrier. This facilitates the switching of the first coupling means between the engaged state and the disengaged state and of the second coupling means between the engaged state and the disengaged state.

In an example, the second outer plate carrier comprises a first abutment portion arranged adjacent to one of the first plates and configured for abutting against one of the first plates. The second outer plate carrier also comprises a second abutment portion arranged adjacent to one of the second plates and configured for abutting against one of the second plates. The second outer plate carrier may be ring-shaped. This has the effect that the first abutment portion may abut against one of the first plates along a full circumference. Thus, the first plates and the first coupling means may be reliably switched between the engaged state and the disengaged state using the outer plate carrier. Furthermore, the second abutment portion may abut against one of the second plates along a full circumference. Thus, the second plates and the second coupling means may be reliably switched between the engaged state and the disengaged state using the outer plate carrier. The first abutment portion and the second abutment portion may be axially shifted. The second abutment portion may be located radially inside with respect to the first abutment portion. This has the effect that, in a configuration in which the first multi-plate clutch and the second multi-plate clutch are axially and/or radially nested into each other, the first abutment portion may abut against one of the first plates on one side with respect to an axial direction and the second abutment portion may abut against one of the second plates on the opposite side with respect to an axial direction. The side of the first plates that does not abut against the first abutment portion of the second outer plate carrier may abut against the first outer plate carrier in an axial direction. The second outer plate carrier is rotatorily connected to the first outer plate carrier. As before, rotatorily connected parts can only rotate together. In other words, a rotatory connection does not allow for a relative rotation of the parts rotatorily connected. This has the effect that there is no difference in rotational speed between the second outer plate carrier and the first outer plate carrier. This has the further effect at the first plates can be reliably clamped between the first outer plate carrier and the first abutment portion of the second outer plate carrier. Altogether also a compact configuration of the clutch assembly is achieved.

In an example, the second outer plate carrier comprises an actuation interface for receiving an axial actuation force. In an example, an actuation disc may abut against the actuation interface of the second outer plate carrier. In another example, the actuation force may be applied on the actuation interface via an axial roller bearing. This has the advantage that an actuator generating the actuation force does not need to turn at the same rotational speed as the actuation interface. In an example, the actuator may be standing still. Thus, an actuation force may be reliably provided at the actuation interface.

In an example, the clutch assembly comprises an actuator. The actuator may be drivingly coupled to the actuation interface. Optionally, the actuator may be drivingly coupled to the actuation interface via a bearing, e.g. an axial roller bearing, and/or a disc. This has the effect that the actuator may exercise an axial force onto the second outer plate carrier. This, in turn, may cause the first plates to be clamped between the first outer plate carrier and the first abutment portion of the second outer plate carrier. In other words, the first multi-plate clutch may be closed by an axial actuation force from the actuator. Still in other words, the first coupling means is transferred into the engagement state and the second coupling means is transferred into the disengagement state. Consequently, the input flange may be drivingly connected to the first output flange.

In an example, the biasing means is axially supported on the second outer plate carrier and axially supported on the first outer plate carrier. This has the effect that the biasing means may be mounted to the second outer plate carrier and the first outer plate carrier in a tensed or loaded state. This causes the biasing means to exercise a biasing force onto the second outer plate carrier and the first outer plate carrier. In other words, the biasing force biases the first outer plate carrier and the second outer plate carrier with respect to one another. In case an actuator is provided, the biasing force may act in a direction opposite to the axial actuation force from the actuator. The biasing force causes the first multi-plate clutch to open and the second multi-plate clutch to close. In other words, the first coupling means is biased towards or held in the disengagement state and the second coupling means is biased towards or held in the engagement state. Consequently, the input flange may be drivingly connected to the second output flange using the biasing means. In this state of the clutch assembly, no further actuation force is necessary. Moreover, due to the biasing means, the clutch assembly always assumes a well-defined state.

In an example, the second outer plate carrier comprises a plurality of biasing arms extending axially. The biasing means is axially supported by the plurality of biasing arms. A biasing arm may be understood as a local protrusion of the second outer plate carrier in axial direction. The plurality of biasing arms may be arranged such that they form a ring-shape. This has the effect that the biasing means is not supported along an entire circumference of the second outer plate carrier but only by local portions thereof. Nevertheless, the biasing means is reliably supported, in particular if the biasing arms are distributed. The local portions, meaning the biasing arms, may be arranged along the circumference of the second outer plate carrier. The biasing arms additionally enhance the flexibility in supporting the biasing means on the second outer plate carrier.

In case the clutch assembly comprises an actuation interface and biasing arms, the actuation interface may be formed at respective ends of the biasing arms. This has the effect that the axial actuation force from the actuator may be reliably applied to the second outer plate carrier.

In an example, the clutch assembly further comprises an abutment part. The abutment part is rotatorily coupled to the first outer plate carrier and is axially movable relative to the first outer plate carrier. The abutment part comprises an abutment portion arranged adjacent to one of the second plates and configured for abutting against one of the second plates. The abutment part may further be prevented from losing contact with the first outer plate carrier in the axial direction by a first retaining means that may be anchored on the first outer plate carrier. In such a configuration, the abutment part may be limited in an axial movement by the second plates on one axial side and by the retaining means on the respective other axial side. Moreover, as far as the second plates are concerned, the second plates may abut against the second abutment portion of the second outer plate carrier on one axial side. On the opposite axial side, the second plates may abut against the abutment part. As before, rotatorily coupled parts can only rotate together. In other words, a rotatory coupling does not allow for a relative rotation of the parts rotatorily coupled parts. Thus, since both the second outer plate carrier and the abutment part are rotatorily coupled to the first outer plate carrier, there is no difference in rotational speed between the second outer plate carrier and the abutment part. This has the effect that the second plates can be reliably clamped between the second outer plate carrier and the abutment part. The clamping force may be provided by the biasing means. Hence, the clamping force may cause the second multi-plate clutch to close and the first multi-plate clutch to open. Consequently, the input flange may be drivingly connected to the second output flange.

In an example, the biasing arms axially extend through the abutment part. This means that the abutment part comprises holes, openings or cut-outs through which the biasing arms extend. This has the effect that the biasing means may be arranged outside an area between the first multi-plate clutch and the second multi-plate clutch. This facilitates a mountability of the clutch assembly and renders the clutch assembly compact.

In an example, the biasing means comprises one or more spring elements. This has the effect that a biasing force may be reliably applied to the second outer plate carrier.

In an example, the biasing means comprises one or more disk springs, e.g. belleville washers. When in a tensed or loaded state, the disk springs exercises the biasing force onto the biasing arms of the second outer plate carrier. In a relaxed state of the disk springs, the biasing force created by the disk springs may be reduced or eliminated. This facilitates closing the first multi-plate clutch and opening the second multi-plate clutch.

According to a second aspect, there is provided a transmission unit. The transmission unit comprises:
- a clutch assembly according to the present disclosure,
- an input shaft
- a first output shaft, and
- a second output shaft.

The input shaft is drivingly connected to the input flange. The first output shaft is drivingly connected to the first output flange. The second output shaft is drivingly connected to the second output flange. Due to the clutch assembly, the transmission unit may provide two different gears, i.e. two different torque paths, corresponding to the respective engagement states of the first coupling means and the second coupling means. The first output flange and/or the second output flange may provide the torque to driven road wheels of the vehicle via a differential and road wheel drive shafts. Since the clutch assembly is biased one gear does not require any specific actuation. More generally speaking, one gear does not require actuation energy. Actuation is only necessary for the respective other gear. This actuation needs to act against the biasing means. Such a configuration is simple from a structural point of view. From an operational point of view, such a configuration is simple and reliable since, due to the biasing means, an alternative use of the first coupling means and the second coupling means, i.e. one gear and the other gear, is guaranteed. This reduces an error probability. In an example, the second output shaft is a hollow shaft. The first output shaft is arranged inside the second output shaft. This this implies that the first output shaft and the second output shaft share the same middle axis. Such a configuration is very compact.

In an example, the first output shaft is radially supported on the input flange. Additionally or alternatively, the first output shaft and the second output shaft are radially supported on one another. The first output shaft being radially supported on the input flange implies that the first output shaft and the input flange share the same middle axis. The case of the first output shaft and second output shaft being radially supported on each other implies that the first output shaft and the second output shaft share the same middle axis. Consequently, also the input flange and the second output shaft share the same middle axis. This configuration is structurally simple in the sense that comparatively few bearings are necessary. Moreover, this configuration is space-saving.

In an example, a first gearwheel is fixedly attached to the first output shaft. A second gearwheel is fixedly attached to the second output shaft. A diameter of the first gearwheel may be smaller than a diameter of the second gearwheel. The first gearwheel and the second gearwheel may mesh with a first pinion and a second pinion on a pinion shaft, respectively. The first pinion and the second pinion may be rotatably mounted to the pinion shaft. A coupling means may be provided which allows to selectively couple the first pinion or the second pinion to the pinion shaft in a rotatory manner, i.e. in a manner that the first pinion or the second pinion can only rotate together with the pinion shaft. Thus, when the clutch assembly directs a torque received at the input flange to the first output shaft, the coupling means may rotatorily couple the first pinion with the pinion shaft. When the clutch assembly directs a torque received at the input flange to the second output shaft, the coupling means may rotatorily couple the second pinion with the pinion shaft. This has the effect that a torque coming from the input shaft can be converted into two different torque levels and provided, e.g. to the driven road wheels of the vehicle. When the clutch assembly directs the torque coming from the input shaft to the first output shaft, the torque that is provided, e.g. to the driven road wheels may be higher than the torque that is provided to the driven road wheels when the clutch assembly directs the torque coming from the input shaft to the second output shaft.

According to a third aspect, there is provided a vehicle. The vehicle comprises a clutch assembly according to the present disclosure. Additionally or alternatively, the vehicle comprises a transmission unit according to the present disclosure. This has the effect that a given torque from the motor of the vehicle can be converted into two different levels of torque and rotational speed, respectively. This way, the electric motor may be operated in an efficient speed range regardless at what speed the vehicle is travelling.

It should be noted that the above examples may be combined with each other irrespective of the aspect involved.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a vehicle according to the present disclosure comprising a transmission unit according to the present disclosure, wherein the transmission unit comprises a clutch assembly according to the present disclosure,
- Figure 2: shows the transmission unit of the vehicle of Figure 1 in a separate view,
- Figure 3: shows a cross sectional view of the transmission unit of Figure 2,
- Figure 4: shows the clutch assembly according to the present disclosure in a separate view, wherein the view corresponds to the view of Figure 3,
- Figure 5: shows a detail V of the clutch assembly of Figure 4 in a state in which disclosure first coupling means is in a disengagement state and a second coupling means is in an engagement state, and
- Figure 6: shows the detail V of the clutch assembly of Figure 4, wherein the first coupling means is in an engagement state and the second coupling means is in the disengagement state.

### DETAILED DESCRIPTION

The Figures are merely schematic representations and serve only to illustrate examples of the disclosure. Identical or equivalent elements are in principle provided with the same reference signs.

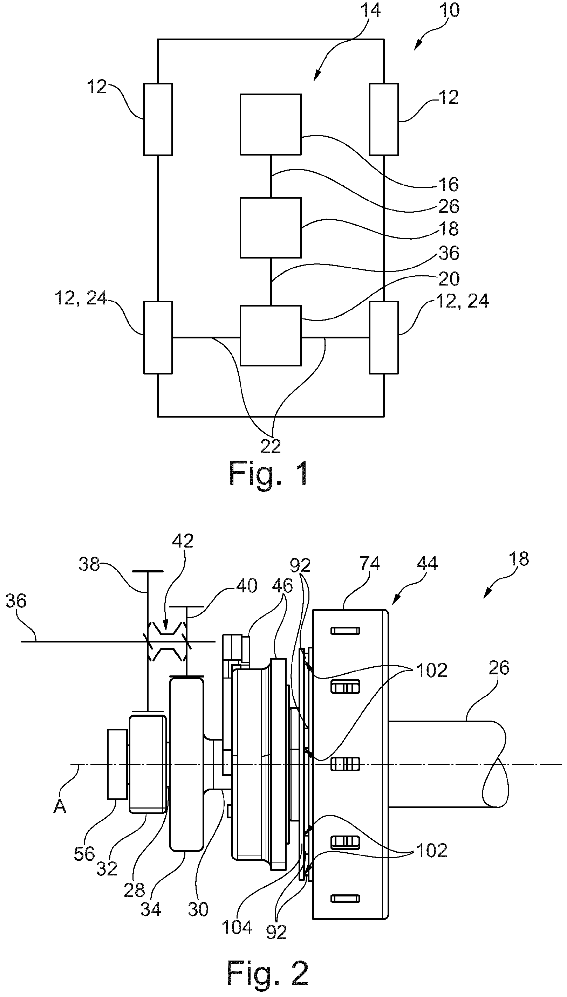

Figure 1 shows a vehicle 10.

The vehicle 10 comprises four road wheels 12.

The vehicle 10 further comprises an electric drivetrain 14.

The electric drivetrain 14 comprises an electric motor 16, a transmission unit 18, a differential 20 and two road wheel drive shafts 22.

Two of the road wheels 12 are drivingly connected to the differential 20 by the road wheel drive shafts 22. Thus, these two road wheels 12 are driven road wheels 24.

A torque or power provided by the electric motor 16 is converted in the transmission unit 18 and provided to the driven road wheels 24 via the differential 20 and the road wheel drive shafts 22.

This causes the driven road wheels 24 to rotate and, thus, the vehicle 10 to move.

Figure 2 shows the transmission unit 18 of Figure 1 in more detail. The transmission unit 18 comprises an input shaft 26, a first output shaft 28 and a second output shaft 30.

A first gearwheel 32 is fixedly connected to the first output shaft 28.

A second gearwheel 34 is fixedly connected to the second output shaft 30.

The transmission unit 18 further comprises a pinion shaft 36, which is only schematically shown.

On the pinion shaft 36, there are a first pinion 38 and a second pinion 40, each being axially and radially supported by a pinion roller bearing.

The first pinion 38 and the second pinion 40 can selectively be drivingly connected to the pinion shaft 36 via a claw coupling 42.

Of course, other coupling means are also conceivable instead of the claw coupling 42.

The first gearwheel 32 meshes with the first pinion 38.

The second gearwheel 34 meshes with the second pinion 40.

A diameter of the first gearwheel 32 is smaller than a diameter of the second gearwheel 34.

Thus, when the first pinion 38 is drivingly coupled to the pinion shaft 36 and when the first gearwheel 32 meshes with the first pinion, the resulting torque on the pinion shaft 36 is higher than when the second pinion 40 is drivingly coupled to the pinion shaft 36 and when the second gearwheel 34 meshes with the second pinion 40.

Consequently, when the first pinion 38 is drivingly coupled to the pinion shaft 36 and when the first gearwheel 32 meshes with the first pinion 38, the resulting rotational speed of the pinion shaft 36 is lower than when the second pinion 40 is drivingly coupled to the pinion shaft 36 and when the second gearwheel 34 meshes with the second pinion 40.

The transmission unit 18 further comprises a clutch assembly 44 and an actuator 46.

The clutch assembly 44 drivingly couples the input shaft 26 with the first output shaft 28 or with the second output shaft 30.

When the actuator 46 exercises an actuation force on the clutch assembly 44, the input shaft 26 is drivingly coupled to the first output shaft 28.

When the actuator 46 does not exercise any actuation force on the clutch assembly 44, the input shaft 26 is drivingly coupled to the second output shaft 30.

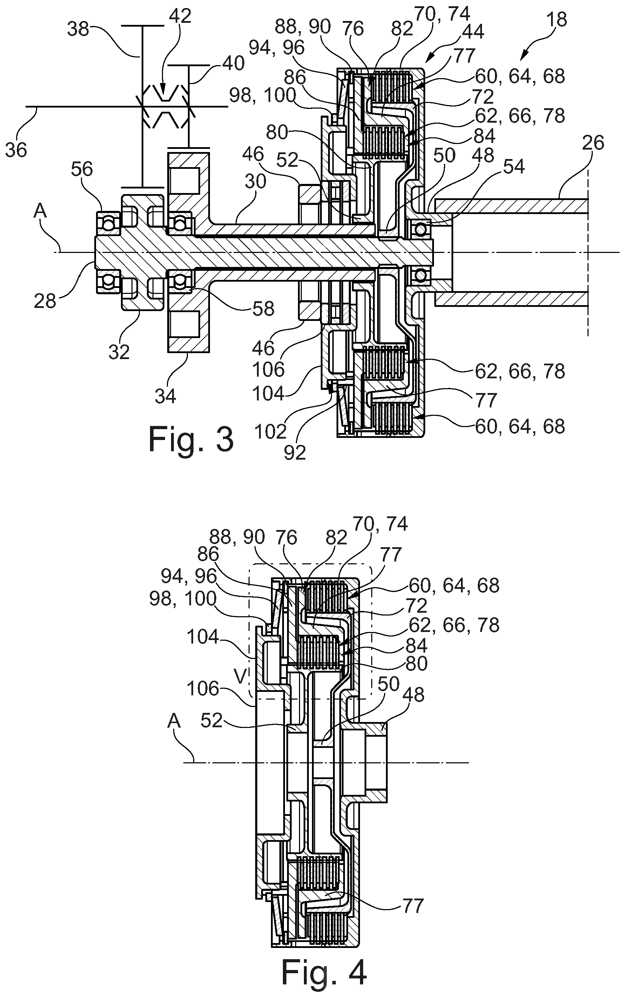

This mechanism will be explained in more detail with respect to Figures 3 and 4.

Figure 3 shows the transmission unit 18 of Figure 2 in a cross sectional view.

The second output shaft 30 is hollow.

The first output shaft 28 is arranged inside the second output shaft 30.

The clutch assembly 44, which is also shown in Figure 4, comprises an input flange 48, a first output flange 50 and a second output flange 52.

The input shaft 26 is drivingly connected to the input flange 48.

The first output shaft 28 is drivingly connected to the first output flange 50.

The second output shaft 30 is drivingly connected to the second output flange 52.

The first output shaft 28 is radially supported in the input flange 48 by a first roller bearing 54.

Additionally, the first output shaft 28 is radially supported on a housing of the transmission unit 18 (not shown) via a second roller bearing 56.

The second output shaft 30 is radially supported on the first output shaft 28 via a third roller bearing 58.

The clutch assembly 18 further comprises first coupling means 60 and second coupling means 62.

In the present example, the first coupling means 60 and the second coupling means 62 are a first multi-plate clutch 64 and a second multi-plate clutch 66, respectively.

The middle axes of the first multi-plate clutch 64, the second multi-plate clutch 66, the input shaft 26, the first output shaft 28 and the second output shaft 30 coincide. Therefore, all middle axes are designated with A.

The first multi-plate clutch 64 has a larger diameter than the second multi-plate clutch 66.

The first multi-plate clutch 64 and the second multi-plate clutch 66 are axially and radially nested into each other.

Due to the coinciding axes A, a torque may be transmitted from the input flange 48 to the first output flange 50 via the first multi-plate clutch 64.

Also, a torque may be transmitted from the input flange 48 to the second output flange 52 via the second multi-plate clutch 66.

Speaking for the transmission unit 18, a torque may be transmitted from the input shaft 26 to the first output shaft 28 via the first multi-plate clutch 64.

Likewise, a torque may be transmitted from the input shaft 26 to the second output shaft 30 via the second multi-plate clutch 66.

In other words, the first multi-plate clutch 64, the first output flange 50, the first output shaft 28 and the first gearwheel 32 relate to a first gear of the electric drivetrain 14 of the vehicle 10.

The second multi-plate clutch 66, the second output flange 52, the second output shaft 30 and the second gearwheel 34 relate to a second gear of the electric drivetrain 14 of the vehicle 10.

The first multi-plate clutch 64 comprises a plurality of first plates 68, a first outer plate carrier 70 and a first inner plate carrier 72.

In the present example, the first outer plate carrier 70 is a clutch basket 74 drivingly connected to the input flange 48. This means that the first outer plate carrier 70 is shaped like a circular cylinder being open at one axial end and closed at the other axial end. The input 48 flange is arranged centrally at the closed axial end.

The first inner plate carrier 72 is drivingly connected to the first output flange 50. In the present example, this connection is formed by a ring-plate shaped section of the part forming the first inner plate carrier 72 and the first output flange.

A first type of the first plates 68 is rotatorily coupled to the first outer plate carrier 70. This means that the first type of the first plates 68 can only rotate together with the first outer plate carrier 70. This type of first plates 68 is axially movable with respect to the first outer plate carrier 70. These first plates 68 may be called outer plates or outer disks.

A second type of the first plates 68 is rotatorily coupled to the first inner plate carrier 72. This means that the second type of the first plates 68 can only rotate together with the first inner plate carrier 72. This type of first plates 68 are axially movable with respect to the first inner plate carrier 72. These first plates 68 may be called inner plates or inner disks.

The first type of first plates 68 the second type of first plates 68 are arranged in an alternating manner along the axial direction.

A driving connection between the first inner plate carrier 72 and the first outer plate carrier 70 is achieved through a clamping force that creates friction between the first type and the second type of the first plates 68.

The same principle as outlined for the first multi-plate clutch 64 also applies to the second multi-plate clutch 66.

For this, the second multi-plate clutch 66 comprises a second outer plate carrier 76, a plurality of second plates 78 and a second inner plate carrier 80.

The second outer plate carrier 76 is rotatorily connected to the clutch basket 74. This means that the second outer plate carrier 76 can only rotate together with the clutch basket 74. At the same time, the second outer plate carrier 76 is axially movable with respect to the clutch basket 74. To this end, a toothing may be provided at an outer circumference of the second outer plate carrier 76 and a meshing toothing may be provided at an inner circumference of the clutch basket 74.

The second outer plate carrier 76 comprises a first abutment portion 82 which is arranged axially adjacent to the first plates 68 such that the first plates 68 may abut against the first abutment portion 82 on one side. The first abutment portion 82 is formed as a ring-shaped plate.

On the opposing side, the first plates 68 may abut against the clutch basket 74.

The second outer plate carrier 76 also comprises a second abutment portion 84 against which the second plates 78 abut on one side. Also the second abutment portion 84 is formed as a ring-shaped plate.

The second abutment portion 84 is arranged adjacent to the second plates 78 such that the second plates 78 may abut against the second abutment portion 84.

A carrier portion 77, which supports the second plates 78, is arranged radially between the first abutment portion 82 and the second abutment portion 84. Also the carrier portion 77 is ring-shaped.

The clutch assembly 44 also comprises an abutment part 86.

The abutment part is generally ring-shaped.

Like the second outer plate carrier 76, the abutment part 86 is rotatorily connected to the clutch basket 74 but axially movable with respect to the clutch basket 74. To this end, a toothing may be provided at an outer circumference of the abutment part 86 and a meshing toothing may be provided at an inner circumference of the clutch basket 74. Thus the abutment part 86 may only rotate together with the clutch basket 74.

Along an axial direction, the abutment part 86 is arranged adjacent to the first abutment portion 82 of the second outer plate carrier 76. At the same time, the abutment part 86 is located on an opposite side of the second outer plate carrier 76 with respect to the first plates 68.

Moreover, the axial movability of the abutment part 86 is delimited by a first retaining means 88, which in the present example is a first locking ring 90 mounted on an inner circumference of the clutch basket 74.

The first retaining means 88 and the second outer plate carrier 76 are located on opposite axial sides of the abutment part 86.

The abutment part 86 also comprises an abutment portion which is located adjacent to the second plates 78 such that the second plates 78 may abut against the abutment portion of the abutment part 86.

The second outer plate carrier 76 further comprises a plurality of biasing arms 92.

The biasing arms 92 extend axially through the abutment part 86.

This means that the biasing arms 92 extend on one axial side of the abutment part 86 and the first abutment portion 82, the second abutment portion 84 and the carrier portion 77 of the second outer plate carrier 76 extend on an opposite side of the abutment part 86.

The clutch assembly 44 further comprises a biasing means 94, which in the present case is a disk spring, more precisely a belleville washer 96.

The belleville washer 96 is axially supported on the biasing arms 92 and on the clutch basket 74.

In more detail, the belleville washer 96 is axially supported on the clutch basket 74 via the first locking ring 90. On the biasing arms 92, the belleville washer 96 is axially supported via a second retaining means 98, which in the present example is a second locking ring 100.

Thus, the Belleville washer 96 is arranged axially between the first locking ring 90 and the second locking ring 100.

The belleville washer 96 creates a biasing force subjecting the first locking ring 90 and the second locking ring 100 to a load oriented such that it tries to push the first locking ring 90 and the second locking ring 100 away from one another.

Due to the above-mentioned configuration of the clutch assembly 44, the abutment part 86, more precisely the abutment portion is biased towards the second plates 78 in a first axial direction and the second abutment portion 84 is biased towards the second plates 78 in a second axial direction oriented opposite to the first axial direction. Thus, the biasing means 94 generates a clamping force acting onto the second multi-plate clutch 66. Thereby, the second multi-plate clutch 66 is closed and the input flange 48 and the second output flange 52 are drivingly connected via the second multi-plate clutch 66.

At the same time, the first abutment portion 82 is biased away from the first plates 68 such that the first multi-plate clutch 64 is opened. Thus, there is no driving connection between the input flange 48 and the first output flange 50.

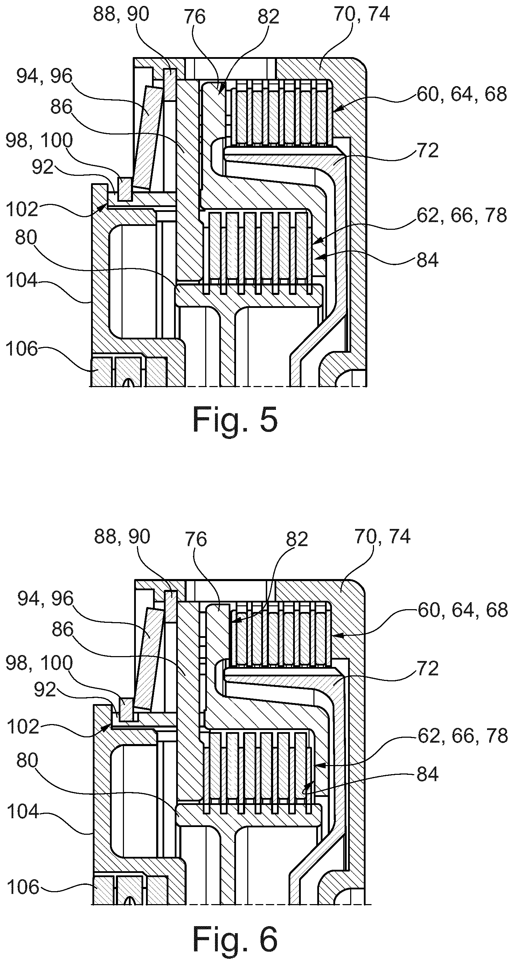

In other words, the second coupling means 62 in the form of the second multi-plate clutch 66 is biased into the engagement state and the first coupling means 60 in the form of the first multi-plate clutch 64 is biased into the disengagement state by the biasing means 94. This can be seen from the gap between the first abutment portion 82 and the first plates 68 in Figure 5.

Moreover, the biasing arms 92 comprise an actuation interface 102 for receiving an axial actuation force that acts in an opposite direction than the biasing force.

In the present example the actuation interface 102 is formed by the axial end faces of the biasing arms 92.

In the present example, the transmission unit 18 comprises disc 104 which may also be called an actuation disk. The disk 104 abuts against the actuation interface 102.

Additionally, an axial roller bearing 106 is provided which contacts the disk 104 at an axial side opposite to the biasing arms 92.

An axial actuation force may be generate by the actuator 46 and may be applied on the axial roller bearing 106. This actuation force then is transmitted to the actuation interface via the disk 104.

The axial roller bearing 106 has the advantage that the actuator 46 may be at a standstill while the remaining components of the transmission unit 18 are turning.

Due to the above-mentioned configuration, the actuation force acts against the load resulting from the biasing means 94.

Moreover, the actuation force moves the first abutment portion 82 axially towards the first plates 68 and moves the second abutment portion 84 axially away from the second plates 78. Thus, the actuation force acts as a clamping force onto the first multi-plate clutch 64. Thereby, the first multi-plate clutch 64 is closed and the input flange 48 and the first output flange 50 are drivingly connected. At the same time, the second multi-plate 66 clutch is opened, meaning that there is no driving connection between the input flange 48 and the second output flange 52.

In other words, due to the actuation force, the second coupling means 62 in the form of the second multi-plate clutch 66 is transferred into the disengagement state and the first coupling means 60 in the form of the first multi-plate clutch 64 is transferred into the engagement state. This can be seen from the gap between the second abutment portion 84 and the second plates 78 in Figure 6.

Generally speaking, when the electric drivetrain 14 of the vehicle 10 may be transferred into first gear, by the actuation force acting onto the axial roller bearing 106. This may cause frictional losses. However, due to the fact that the clutch basket 74, the second outer plate carrier 76 and the disc 104 are expected to rotate at low speed when the electric drivetrain 14 is in first gear, these losses may not be significant.

When the electric drivetrain 14 of the vehicle 10 is in second gear, an actuation force acting onto the axial roller bearing 106 is not necessary. This eliminates frictional losses in the axial roller bearing 106. Due to the fact that the clutch basket 74, the second outer plate carrier 76 and the disc 104 are expected to rotate at high speed when the electric drivetrain 14 is in second gear, it is important to eliminate frictional losses in the axial roller bearing 106 as these losses may indeed be significant.

In summary, the transmission unit 18 and/or the clutch assembly 44 may be operated as follows.

In a first step, a vehicle 1 with a transmission unit 18 and/or a clutch assembly 44 is provided.

The transmission unit 18 and/or the clutch assembly 44 are in an initial state.

In the initial state, no actuation force is provided. This means that the biasing means 94 is acting on the remaining components of the clutch assembly 44. Thus, the second coupling means 62 is in the engagement state and the first coupling means 60 is in the disengagement state.

In other words, the electric drivetrain 14 of the vehicle 10 and the transmission unit 18 is in second gear.

In a second step, an axial actuation force is provided through the actuator 46 via the axial roller bearing 106 and the disc 104 to the biasing arms 92 of the second outer plate carrier 76.

This causes the first multi-plate clutch 64 to close and the second multi-plate clutch 66 to open.

In other words, the input shaft 26 and the first output shaft 28 are drivingly connected. Thus, the second coupling means 62 is in the disengagement state and the first coupling means 60 is in the engagement state.

Still in other words, the electric drivetrain 14 of the vehicle 10 and the transmission unit 18 is in first gear.

It is noted that, the order of the first step and the second step may also be changed. This means that the electric drivetrain 14 of the vehicle 10 may shift from first gear back into second gear. In this case, the actuation force is withdrawn when the electric drivetrain 14 is in second gear.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: vehicle
- 12: road wheel
- 14: electric drivetrain
- 16: electric motor
- 18: transmission unit
- 20: differential
- 22: road wheel driveshaft
- 24: driven road wheel
- 26: input shaft
- 28: first output shaft
- 30: second output shaft
- 32: first gearwheel
- 34: second gearwheel
- 36: pinion shaft
- 38: first pinion
- 40: second pinion
- 42: claw coupling
- 44: clutch assembly
- 46: actuator
- 48: input flange
- 50: first output flange
- 52: second output flange
- 54: first roller bearing
- 56: second roller bearing
- 58: third roller bearing
- 60: first coupling means
- 62: second coupling means

- 64: first multi-plate clutch
- 66: second multi-plate clutch
- 68: first plate
- 70: first outer plate carrier
- 72: first inner plate carrier
- 74: clutch basket
- 76: second outer plate carrier
- 77: carrier portion
- 78: second plate
- 80: second inner plate carrier
- 82: first abutment portion
- 84: second abutment portion
- 86: abutment part
- 88: first retaining means
- 90: first locking ring
- 92: biasing arm
- 94: biasing means
- 96: belleville washer
- 98: second retaining means
- 100: second locking ring
- 102: actuation interface
- 104: disc
- 106: axial roller bearing
- A: middle axes

## Claims

1. A clutch assembly (44) for selectively coupling one of a first output shaft (28) and a second output shaft (30) with an input shaft (26), the clutch assembly (44) comprising:
- an input flange (48) configured for coupling to the input shaft (26),
- a first coupling means (60) rotatable around a first axis (A),
- a second coupling means (62) rotatable around a second axis (A),
- a first output flange (50) configured for coupling to the first output shaft (28), and
- a second output flange (52) configured for coupling to the second output shaft (30), and
- a biasing means (94),
wherein the first coupling means (60) is drivingly connected to the input flange (48) and drivingly connected to the first output flange (50),
wherein the first coupling means (60) drivingly connects the input flange (48) and the first output flange (50) when in an engagement state and wherein the first coupling means (60) drivingly disconnects the input flange (48) and the first output flange (50) when in a disengagement state,
wherein the second coupling means (62) is drivingly connected to the input flange (48) and drivingly connected to the second output flange (52), wherein the second coupling means (62) drivingly connects the input flange (48) and the second output flange (52) when in an engagement state and wherein the second coupling means (62) drivingly disconnects the input flange (48) and the second output flange (52) when in a disengagement state,
wherein the second coupling means (62) is biased into the engagement state and the first coupling means (60) is biased into the disengagement state by the biasing means (94), **characterized in that**
the second coupling means (62) is axially and/or radially nested in the first coupling means (60).

2. The clutch assembly (44) of claim 1, wherein the first axis (A) and the second axis (A) coincide and/or wherein one or more of a middle axis (A) of the input flange (48), a middle axis (A) of the first output flange (50) and a middle axis (A) of the second output flange (52) coincide.

3. The clutch assembly (44) according to any one of the preceding claims, wherein the first coupling means (60) is a first multi-plate clutch (64) comprising a plurality of first plates (68), a first outer plate carrier (70) and a first inner plate carrier (72), and wherein the second coupling means (62) is a second multi-plate clutch (66), comprising a plurality of second plates (78), a second outer plate carrier (76) and a second inner plate carrier (80).

4. The clutch assembly (44) according to claim 3, wherein the first outer plate carrier (70) is fixedly connected to the input flange (48), and/or
wherein the first inner plate carrier (72) is fixedly connected to the first output flange (50), and/or
wherein the second inner plate carrier (80) is fixedly connected to the second output flange (52) and/or wherein the second outer plate carrier (76) is rotatorily connected to the first outer plate carrier (70) and axially movable relative to the first outer plate carrier (70).

5. The clutch assembly (44) of claim 3 or 4, wherein the second outer plate carrier (76) comprises a first abutment portion (82) arranged adjacent to one of the first plates (68) and configured for abutting against one of the first plates (68), and wherein the second outer plate carrier (76) comprises a second abutment portion (84) arranged adjacent to one of the second plates (78) and configured for abutting against one of the second plates (78).

6. The clutch assembly (44) of any one of claims 3 to 5, wherein the second outer plate carrier (76) comprises an actuation interface (102) for receiving an axial actuation force.

7. The clutch assembly (44) of any one of claims 3 to 6, wherein the biasing means (94) is axially supported on the second outer plate carrier (76) and axially supported on the first outer plate carrier (70).

8. The clutch assembly (44) of claim 7, wherein the second outer plate carrier (76) comprises a plurality of biasing arms (92) extending axially, and wherein the biasing means (94) is axially supported by the plurality of biasing arms (92).

9. The clutch assembly (44) of any one of claims 3 to 8, further comprising an abutment part (86), wherein the abutment part (86) is rotatorily coupled to the first outer plate carrier (70) and is axially movable relative to the first outer plate carrier (70), wherein the abutment part (86) comprises an abutment portion arranged adjacent to one of the second plates (78) and configured for abutting against one of the second plates (78).

10. The clutch assembly (44) according to claims 8 and 9, wherein the biasing arms (92) axially extend through the abutment part (86).

11. A transmission unit (18) comprising:
- a clutch assembly (44) according to any of the preceding claims,
- an input shaft (26),
- a first output shaft (28), and
- a second output shaft (30),
wherein the input shaft (26) is drivingly connected to the input flange (48),
wherein the first output shaft (28) is drivingly connected to the first output flange (50),
wherein the second output shaft (30) is drivingly connected to the second output flange (52).

12. The transmission unit (18) according claim 11, wherein the second output shaft (30) is a hollow shaft and wherein the first output shaft (28) is arranged inside the second output shaft (30).

13. The transmission unit (18) according to claim 11 or 12, wherein the first output shaft (28) is radially supported on the input flange (48) and/or wherein the first output shaft (28) and the second output shaft (30) are radially supported on one another.

14. A vehicle (10) comprising a clutch assembly (44) according to any of claims 1 to 10 or a transmission unit (18) according to any of claims 11 to 13.

## Patentansprüche

1. Kupplungsanordnung (44) zum wahlweisen Koppeln einer von einer ersten Ausgangswelle (28) und einer zweiten Ausgangswelle (30) mit einer Eingangswelle (26), wobei die Kupplungsanordnung (44) umfasst:
- einen Eingangsflansch (48), der dazu eingerichtet ist, mit der Eingangswelle (26) gekoppelt zu werden,
- ein erstes Kopplungsmittel (60), das um eine erste Achse (A) drehbar ist,
- ein zweites Kopplungsmittel (62), das um eine zweite Achse (A) drehbar ist,
- einen ersten Ausgangsflansch (50), der dazu eingerichtet ist, mit der ersten Ausgangswelle (28) gekoppelt zu werden, und
- einen zweiten Ausgangsflansch (52), der dazu eingerichtet ist, mit der zweiten Ausgangswelle (30) gekoppelt zu werden, und
- ein Vorspannmittel (94),
wobei das erste Kopplungsmittel (60) antriebsmäßig mit dem Eingangsflansch (48) verbunden ist und antriebsmäßig mit dem ersten Ausgangsflansch (50) verbunden ist, wobei das erste Kopplungsmittel (60) den Eingangsflansch (48) und den ersten Ausgangsflansch (50), wenn es sich in einem Einrückzustand befindet, antriebsmäßig verbindet, und wobei das erste Kopplungsmittel (60) den Eingangsflansch (48) und den ersten Ausgangsflansch (50), wenn es sich in einem Ausrückzustand befindet, antriebsmäßig trennt,
wobei das zweite Kopplungsmittel (62) antriebsmäßig mit dem Eingangsflansch (48) verbunden ist und antriebsmäßig mit dem zweiten Ausgangsflansch (52) verbunden ist, wobei das zweite Kopplungsmittel (62) den Eingangsflansch (48) und den zweiten Ausgangsflansch (52), wenn es sich in einem Einrückzustand befindet, antriebsmäßig verbindet, und wobei das zweite Kopplungsmittel (62) den Eingangsflansch (48) und den zweiten Ausgangsflansch (52), wenn es sich in einem Ausrückzustand befindet, antriebsmäßig trennt,
wobei das zweite Kopplungsmittel (62) durch das Vorspannmittel (94) in den Einrückzustand vorgespannt ist und das erste Kopplungsmittel (60) durch das Vorspannmittel (94) in den Ausrückzustand vorgespannt ist,
**dadurch gekennzeichnet, dass**
das zweite Kopplungsmittel (62) axial und/oder radial in das erste Kopplungsmittel (60) eingebettet ist.

2. Kupplungsanordnung (44) nach Anspruch 1, wobei die erste Achse (A) und die zweite Achse (A) zusammenfallen, und/oder wobei eine oder mehrere von einer Mittelachse (A) des Eingangsflansches (48), einer Mittelachse (A) des ersten Ausgangsflansches (50) und einer Mittelachse (A) des zweiten Ausgangsflansches (52) zusammenfallen.

3. Kupplungsanordnung (44) nach einem der vorangehenden Ansprüche, wobei das erste Kopplungsmittel (60) eine erste Mehrscheibenkupplung (64) ist, die mehrere erste Scheiben (68), einen ersten äußeren Scheibenträger (70) und einen ersten inneren Scheibenträger (72) umfasst, und wobei das zweite Kopplungsmittel (62) eine zweite Mehrscheibenkupplung (66) ist, die mehrere zweite Scheiben (78), einen zweiten äußeren Scheibenträger (76) und einen zweiten inneren Scheibenträger (80) umfasst.

4. Kupplungsanordnung (44) nach Anspruch 3, wobei der erste äußere Scheibenträger (70) fest mit dem Eingangsflansch (48) verbunden ist, und/oder
wobei der erste innere Scheibenträger (72) fest mit dem ersten Ausgangsflansch (50) verbunden ist, und/oder
wobei der zweite innere Scheibenträger (80) fest mit dem zweiten Ausgangsflansch (52) verbunden ist, und/oder wobei der zweite äußere Scheibenträger (76) drehbar mit dem ersten äußeren Scheibenträger (70) verbunden und relativ zu dem ersten äußeren Scheibenträger (70) axial beweglich ist.

5. Kupplungsanordnung (44) nach Anspruch 3 oder 4, wobei der zweite äußere Scheibenträger (76) einen ersten Anliegeabschnitt (82) umfasst, der neben einer der ersten Scheiben (68) angeordnet und dazu eingerichtet ist, an einer der ersten Scheiben (68) anzuliegen, und wobei der zweite äußere Scheibenträger (76) einen zweiten Anliegeabschnitt (84) umfasst, der neben einer der zweiten Scheiben (78) angeordnet und dazu eingerichtet ist, an einer der zweiten Scheiben (78) anzuliegen.

6. Kupplungsanordnung (44) nach einem der Ansprüche 3 bis 5, wobei der zweite äußere Scheibenträger (76) eine Betätigungsschnittstelle (102) zum Aufnehmen einer axialen Betätigungskraft umfasst.

7. Kupplungsanordnung (44) nach einem der Ansprüche 3 bis 6, wobei das Vorspannmittel (94) axial an dem zweiten äußeren Scheibenträger (76) gestützt ist und axial an dem ersten äußeren Scheibenträger (70) gestützt ist.

8. Kupplungsanordnung (44) nach Anspruch 7, wobei der zweite äußere Scheibenträger (76) mehrere Vorspannarme (92) umfasst, die sich axial erstrecken, und wobei das Vorspannmittel (94) axial durch die mehreren Vorspannarmen (92) gestützt wird.

9. Kupplungsanordnung (44) nach einem der Ansprüche 3 bis 8, des Weiteren umfassend einen Anliegeteil (86), wobei der Anliegeteil (86) drehbar mit dem ersten äußeren Scheibenträger (70) gekoppelt ist und relativ zu dem ersten äußeren Scheibenträger (70) axial bewegbar ist, wobei der Anliegeteil (86) einen Anliegeabschnitt umfasst, der neben einer der zweiten Scheiben (78) angeordnet und dazu eingerichtet ist, an einer der zweiten Scheiben (78) anzuliegen.

10. Kupplungsanordnung (44) nach den Ansprüchen 8 und 9, wobei sich die Vorspannarme (92) axial durch den Anliegeteil (86) hindurch erstrecken.

11. Getriebeeinheit (18), umfassend:
- eine Kupplungsanordnung (44) nach einem der vorangehenden Ansprüche,
- eine Eingangswelle (26),
- eine erste Ausgangswelle (28) und
- eine zweite Ausgangswelle (30),
wobei die Eingangswelle (26) antriebsmäßig mit dem Eingangsflansch (48) gekoppelt ist,
wobei die erste Ausgangswelle (28) antriebsmäßig mit dem ersten Ausgangsflansch (50) gekoppelt ist,
wobei die zweite Ausgangswelle (30) antriebsmäßig mit dem zweiten Ausgangsflansch (52) gekoppelt ist.

12. Getriebeeinheit (18) nach Anspruch 11, wobei die zweite Ausgangswelle (30) eine Hohlwelle ist, und wobei die erste Ausgangswelle (28) innerhalb der zweiten Ausgangswelle (30) angeordnet ist.

13. Getriebeeinheit (18) nach Anspruch 11 oder 12, wobei die erste Ausgangswelle (28) radial auf dem Eingangsflansch (48) gestützt ist, und/oder wobei die erste Ausgangswelle (28) und die zweite Ausgangswelle (30) radial aufeinander gestützt sind.

14. Fahrzeug (10), umfassend eine Kupplungsanordnung (44) nach einem der Ansprüche 1 bis 10 oder eine Getriebeeinheit (18) nach einem der Ansprüche 11 bis 13.

## Revendications

1. Bloc d'embrayage (44) pour accoupler sélectivement l'un parmi un premier arbre de sortie (28) et un second arbre de sortie (30) avec un arbre d'entrée (26), le bloc d'embrayage (44) comprenant :
- un flasque d'entrée (48) conçu pour s'accoupler à l'arbre d'entrée (26),
- un premier moyen d'accouplement (60) tournant autour d'un premier axe (A),
- un second moyen d'accouplement (62) tournant autour d'un second axe (A),
- un premier flasque de sortie (50) conçu pour s'accoupler au premier arbre de sortie (28), et
- un second flasque de sortie (52) conçu pour s'accoupler au second arbre de sortie (30), et
- un moyen de sollicitation (94),
dans lequel le premier moyen d'accouplement (60) est relié en entraînement au flasque d'entrée (48) et relié en entraînement au premier flasque de sortie (50),
dans lequel le premier moyen d'accouplement (60) relie en entraînement le flasque d'entrée (48) et le premier flasque de sortie (50) lorsqu'il est dans un état de prise et dans lequel le premier moyen d'accouplement (60) sépare en entraînement le flasque d'entrée (48) et le premier flasque de sortie (50) lorsqu'il est dans un état de désaccouplement,
dans lequel le second moyen d'accouplement (62) est relié en entraînement au flasque d'entrée (48) et relié en entraînement au second flasque de sortie (52), dans lequel le second moyen d'accouplement (62) relie en entraînement le flasque d'entrée (48) et le second flasque de sortie (52) lorsqu'il est dans un état de prise et dans lequel le second moyen d'accouplement (62) sépare en entraînement le flasque d'entrée (48) et le second flasque de sortie (52) lorsqu'il est dans un état de désaccouplement,
dans lequel le second moyen d'accouplement (62) est sollicité dans l'état de prise et le premier moyen d'accouplement (60) est sollicité dans l'état de désaccouplement, par le moyen de sollicitation (94), **caractérisé en ce que**
le second moyen d'accouplement (62) est emboîté axialement et/ou radialement dans le premier moyen d'accouplement (60).

2. Bloc d'embrayage (44) selon la revendication 1, dans lequel le premier axe (A) et le second axe (A) coïncident et/ou dans lequel l'un ou plusieurs parmi un axe médian (A) du flasque d'entrée (48), un axe médian (A) du premier flasque de sortie (50) et un axe médian (A) du second flasque de sortie (52) coïncident.

3. Bloc d'embrayage (44) selon l'une quelconque des revendications précédentes, dans lequel le premier moyen d'accouplement (60) est un premier embrayage multidisque (64) comprenant une pluralité de premiers disques (68), un premier support de disques extérieur (70) et un premier support de disques intérieur (72), et dans lequel le second moyen d'accouplement (62) est un second embrayage multidisque (66), comprenant une pluralité de seconds disques (78), un second support de disques extérieur (76) et un second support de disques intérieur (80).

4. Bloc d'embrayage (44) selon la revendication 3, dans lequel le premier support de disques extérieur (70) est relié à demeure au flasque d'entrée (48), et/ou
dans lequel le premier support de disques intérieur (72) est relié à demeure au premier flasque de sortie (50), et/ou
dans lequel le second support de disques intérieur (80) est relié à demeure au second flasque de sortie (52) et/ou dans lequel le second support de disques extérieur (76) est relié en rotation au premier support de disques extérieur (70) et est axialement mobile par rapport au premier support de disques extérieur (70).

5. Bloc d'embrayage (44) selon la revendication 3 ou 4, dans lequel le second support de disques extérieur (76) comprend une première portion de butée (82) disposée adjacente à l'un des premiers disques (68) et configurée pour venir en butée contre l'un des premiers disques (68), et dans lequel le second support de disques extérieur (76) comprend une seconde portion de butée (84) disposée adjacente à l'un des seconds disques (78) et configurée pour venir en butée contre l'un des seconds disques (78).

6. Bloc d'embrayage (44) selon l'une quelconque des revendications 3 à 5, dans lequel le second support de disques extérieur (76) comprend une interface d'actionnement (102) pour recevoir une force d'actionnement axiale.

7. Bloc d'embrayage (44) selon l'une quelconque des revendications 3 à 6, dans lequel le moyen de sollicitation (94) est supporté axialement sur le second support de disques extérieur (76) et supporté axialement sur le premier support de disques extérieur (70).

8. Bloc d'embrayage (44) selon la revendication 7, dans lequel le second support de disques extérieur (76) comprend une pluralité de bras de sollicitation (92) s'étendant axialement, et dans lequel le moyen de sollicitation (94) est supporté axialement par la pluralité de bras de sollicitation (92).

9. Bloc d'embrayage (44) selon l'une quelconque des revendications 3 à 8, comprenant en outre une partie de butée (86), dans lequel la partie de butée (86) est accouplée en rotation au premier support de disques extérieur (70) et est axialement mobile par rapport au premier support de disques extérieur (70), dans lequel la partie de butée (86) comprend une portion de butée disposée adjacente à l'un des seconds disques (78) et configurée pour venir en butée contre l'un des seconds disques (78).

10. Bloc d'embrayage (44) selon les revendications 8 et 9, dans lequel les bras de sollicitation (92) s'étendent axialement à travers la partie de butée (86).

11. Unité de transmission (18) comprenant :
- un bloc d'embrayage (44) selon l'une quelconque des revendications précédentes,
- un arbre d'entrée (26),
- un premier arbre de sortie (28), et
- un second arbre de sortie (30),
dans laquelle l'arbre d'entrée (26) est relié en entraînement au flasque d'entrée (48),
dans laquelle le premier arbre de sortie (28) est relié en entraînement au premier flasque de sortie (50),
dans lequel le second arbre de sortie (30) est relié en entraînement au second flasque de sortie (52).

12. Unité de transmission (18) selon la revendication 11, dans laquelle le second arbre de sortie (30) est un arbre creux et dans laquelle le premier arbre de sortie (28) est disposé à l'intérieur du second arbre de sortie (30).

13. Unité de transmission (18) selon la revendication 11 ou 12, dans laquelle le premier arbre de sortie (28) est supporté radialement sur le flasque d'entrée (48) et/ou dans laquelle le premier arbre de sortie (28) et le second arbre de sortie (30) sont supportés radialement l'un sur l'autre.

14. Véhicule (10) comprenant un bloc d'embrayage (44) selon l'une quelconque des revendications 1 à 10 ou une unité de transmission (18) selon l'une quelconque des revendications 11 à 13.
